# EUROPEAN PATENT SPECIFICATION

(11) **EP 2 957 495 B1**
(45) Date of publication and mention of the grant of the patent: **04.04.2018**
(21) Application number: 14751318.8
(22) Date of filing: 13.02.2014
(51) Int. Cl.: B62M 6/55, B62M 6/45

(54) **POWER-ASSISTED BICYCLE**
STROMUNTERSTÜTZTES FAHRRAD
BICYCLETTE À ASSISTANCE DE PUISSANCE

(30) Priority: 13.02.2013 JP 2013025059
(43) Date of publication of application: 23.12.2015
(60) Divisional application: 18153973.5
(73) Proprietor: Panasonic Intellectual Property Management Co., Ltd., Osaka-shi, Osaka 540-6207 (JP)
(72) Inventor: KAWAKAMI, Masafumi, Osaka-shi,Osaka 540-6207 (JP)
(74) Representative: Grünecker Patent- und Rechtsanwälte PartG mbB
(86) International application number: PCT/JP2014/000725
(87) International publication number: WO 2014/125817

(56) References cited:
- EP-A1- 2 338 781
- JP-A- H10 250 673
- JP-A- H11 189 193
- JP-A- H11 189 193
- JP-A- 2005 225 489
- JP-A- 2007 176 221

## Description

### Technical Field

The present invention relates to a power-assisted bicycle that can travel with a combination of a human driving force generated by a pedal force from a pedal and an auxiliary driving force generated by a motor according to the preamble of claim 1.

### Background Art

A power-assisted bicycle as described in the preamble of claim 1 is already known from JP H11 189 193 A. A known power-assisted bicycle includes a motor as a driving source that receives power from a power storage such as a battery. The power-assisted bicycle detects a human driving force, which includes a pedal force applied to a pedal, by means of a torque sensor or the like, and adds an auxiliary driving force (assisting force) of the motor according to the human driving force. Thus, such a power-assisted bicycle can smoothly travel on an uphill or the like.

In such a power-assisted bicycle, a motor drive unit including the motor is disposed at or near the location of a crank shaft. Moreover, the power-assisted bicycle configured thus has a relatively heavy motor drive unit that is disposed at a low position at the center of the power-assisted bicycle (that is, the intermediate point between a front wheel and a rear wheel) in the longitudinal direction. Thus, the front and rear wheels of the power-assisted bicycle configured thus can be more easily lifted than a power-assisted bicycle having a motor in the hub of a front or rear wheel. Such a power-assisted bicycle can easily pass over a step of a path, achieving ease of handling and high traveling stability.

Motor drive units to be provided in such power-assisted bicycles are broadly classified into a so-called double-shaft motor drive unit 100 including, as shown in FIG. 13, an auxiliary driving force output sprocket 103 that outputs an auxiliary driving force from a motor in addition to a driving sprocket (also called a front sprocket or a chain sprocket) 102 serving as a human driving force output wheel disposed on one end of a crank shaft 101, and a so-called single-shaft motor drive unit 200 shown in FIGS. 14 and 15 in which a human driving force generated by a pedal force and an auxiliary driving force generated by a motor are combined in the motor drive unit 200 and then the resultant force is outputted from a driving sprocket 201.

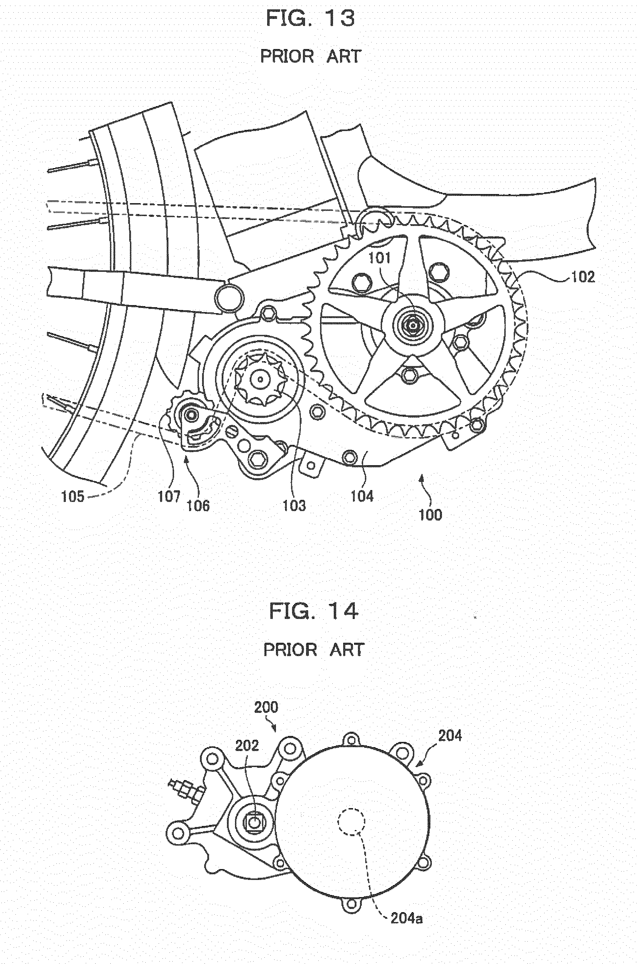

The double-shaft motor drive unit 100 is disclosed in, for example, Patent Literature 1. As shown in FIG. 13, the auxiliary driving force output sprocket 103 of the double-shaft motor drive unit 100 is provided in such a manner as to protrude to the outside of a unit case 104 of the motor drive unit 100 from a portion behind the driving sprocket 102 in the motor drive unit 100. The driving sprocket 102 for outputting a human driving force and the auxiliary driving force output sprocket 103 for outputting an auxiliary driving force are engaged with a chain 105 serving as an endless driving force transmission member. The human driving force and the auxiliary driving force are combined by the chain 105 and then are transmitted to the rear wheel.

Further behind the auxiliary driving force output sprocket 103, a tensioner device (also called a guide device) 106 is provided in engagement with the chain 105, which has been engaged with the auxiliary driving force output sprocket 103, so as to guide the chain 105 downward. Moreover, a tension sprocket 107 provided in the tensioner device 106 increases the winding angle of the chain 105 engaged with the auxiliary driving force output sprocket 103.

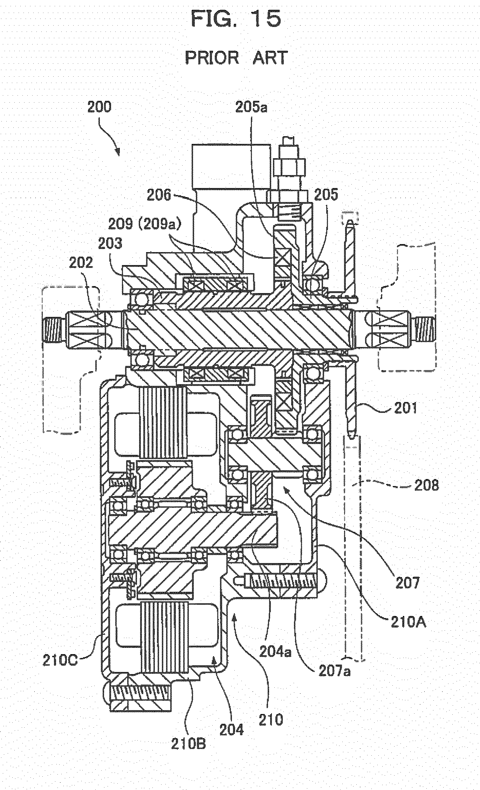

The single-shaft motor drive unit 200 is disclosed in, for example, Patent Literature 2. As shown in FIGS. 14 and 15, in the single-shaft motor drive unit 200, the outer periphery of a crank shaft 202 that receives a human driving force transmitted from a pedal has a cylindrical human-power transmission member 203 that receives the human driving force transmitted by serration coupling and so on, and a force combining member 205 where a human driving force transmitted via the human-power transmission member 203 is combined with an auxiliary driving force from a motor 204. Subsequently, a human driving force from the human-power transmission member 203 is transmitted to the force combining member 205 via a one-way clutch 206. A large-diameter gear portion 205a that receives an auxiliary driving force transmitted from the motor 204 via a deceleration mechanism 207 is formed on one end of the force combining member 205, whereas the driving sprocket 201 is attached to another end of the force combining member 205, the driving sprocket 201 serving as a driving force output wheel engaged with a chain 208 serving as an endless driving force transmission member. A resultant force obtained by the force combining member 205 is transmitted from the driving sprocket 201 to the rear wheel through the chain 208.

As shown in FIGS. 14 and 15, the single-shaft motor drive unit 200 is configured such that only the driving sprocket 201 is engaged with the chain 208 and the resultant force of a human driving force and an auxiliary driving force is transmitted to the chain 208. In contrast, the double-shaft motor drive unit 100 needs to engage, as shown in FIG. 13, the driving sprocket 102 for transmitting a human driving force, the auxiliary driving force output sprocket 103 for transmitting an auxiliary driving force, and the tension sprocket 107 with the chain 105.

Thus, the area of the single-shaft motor drive unit 200 in side view (laterally projected area) can be advantageously smaller (more compact) than that of the double-shaft motor drive unit 100 by devising the layout of the motor 204 and the deceleration mechanism 207. A so-called front derailleur can be easily attached to the single-shaft motor drive unit 200 including the driving sprocket 201 with multiple stages. On the other hand, the driving sprocket 102, the auxiliary driving force output sprocket 103, and the tension sprocket 107 need to be engaged with the chain 105 in the double-shaft motor drive unit 100, leading to difficulty in attaching the front derailleur. Moreover, the single-shaft motor drive unit 200 advantageously eliminates the need for providing the tensioner device 106 of the tension sprocket 107 or the like.

Typically, in the advantageous single-shaft motor drive unit 200, a magneto-striction torque sensor 209 for detecting a human driving force is frequently provided on the outer periphery of the human-power transmission member 203, which receives a human driving force transmitted from the crank shaft 202, and a portion opposed to the outer periphery. Specifically, a magneto-striction generation portion is formed on the outer periphery of the human-power transmission member 203, and a coil 209a for detecting a change of magnetism on the magneto-striction generation portion is opposed to the magneto-striction generation portion. When right and left pedals are pressed, the crank shaft 202 is twisted by a pedal force (human driving force). Thus, the twisted state of the human-power transmission member 203 that receives a human driving force transmitted from the crank shaft 202 is detected by the torque sensor 209.

The single-shaft motor drive unit 200 configured thus is stored in a unit casing 210 (210A, 210B, 210C) having high stiffness. Specifically, the motor drive unit 200 is disposed at a relatively low position of the power-assisted bicycle and is stored and protected in the unit casing 210 (210A, 210B, 210C) so as not to be damaged by foreign matters such as a stone on a road.

### Citation List

### Patent Literatures

Patent Literature 1: Japanese Patent Laid-Open No. 2009-208710
Patent Literature 2: Japanese Patent Laid-Open No. 10-250673

### Summary of Invention

### Technical Problem

A power-assisted bicycle needs to have a control board for performing various kinds of control, e.g., control on a motor. In the motor drive unit 200 of Patent Literature 2, however, a control board is not disclosed. In this case, a control board needs to be disposed at a different location from the motor drive unit 200 and further requires a protection case that protects the control board from damage, considerably increasing the manufacturing cost.

In order to suppress a large increase in manufacturing cost, a control board may be stored in the single-shaft motor drive unit 200 (specifically, in the unit casing 210 of the motor drive unit 200). In this case, the control board protected by the unit casing 210 can be free from damage. At least a part of the unit casing 210 (210A, 210B, 210C) is metallic and thus advantageously improves stiffness. Moreover, if the control board has a heat-generating electronic component, the heat-generating electronic component or a radiator provided on the heat-generating electronic component is brought into contact with or near the metallic unit casing 210 (210A, 210B, 210C), advantageously improving the heat dissipation of the heat-generating electronic component with higher reliability.

However, if the control board is mounted in the motor drive unit 200, friction reducing oil such as grease applied (fed) onto an engaged portion between the gear portions of the deceleration mechanism 207 or abrasion powder contained in the oil on the gear portions may disperse to the location of the control board so as to corrosively damage the control board or the terminal of an electronic component mounted on the control board.

The present invention has been devised to solve the problem. An object of the present invention is to provide a power-assisted bicycle that can prevent adhesion of oil (lubricating oil, also referred to as grease) or abrasion powder from a gear portion to, for example, a control board even if the control board or the like is provided in the unit casing of a single-shaft motor drive unit.

### Solution to Problem

The above and other objects of the invention are achieved by the power-assisted bicycle according to claim 1.

The present invention refers to a power-assisted bicycle that can travel with a combination of a human driving force generated by a pedal force from a pedal and an auxiliary driving force generated by a motor, the power-assisted bicycle including: a force combining member on the outer periphery of a crank shaft that receives a human driving force transmitted from the pedal, the force combining member combining the human driving force and the auxiliary driving force generated by the motor; the human driving force and the auxiliary driving force being combined by the force combining member into a resultant force transmitted to a rear wheel through a driving force output wheel coaxial with the crank shaft and an endless driving force transmission member wound around the human driving force output wheel; a deceleration mechanism having a plurality of gear portions that are engaged with each other on the transmission path of an auxiliary driving force from the motor to the force combining member; a motor drive unit that includes a unit casing containing the motor, the central portion of the crank shaft, the force combining member, and the deceleration mechanism; and a control board contained in the unit casing of the motor drive unit, the motor drive unit containing an oil guard cover that serves as a partition between the region of the deceleration mechanism and the region of the control board and prevents oil on the gear portions of the deceleration mechanism from penetrating into the region of the control board.

In a so-called single-shaft motor drive unit that transmits the resultant force of the human driving force and the auxiliary driving force to the rear wheel through the driving force output wheel coaxial with the crank shaft, this configuration can store the control board in the unit casing of the single-shaft motor drive unit and further allows the oil guard cover to prevent oil or abrasion powder on the gear portions of the deceleration mechanism from penetrating into the region of the control board. Thus, this configuration can prevent the oil or abrasion powder on the gear portions from dispersing to the location of the control board so as to corrosively damage the control board or the terminal of an electronic component mounted on the control board.

Furthermore, a cylindrical human-power transmission member is disposed on the outer periphery of the crank shaft so as to receive the transmitted human driving force. The force combining member receives the human driving force transmitted via the human-power transmission member, and the human-power transmission member has a magneto-striction generation portion for a torque sensor for detecting the human driving force. The oil guard cover has a wall portion as a partition between the region of a large-diameter gear portion provided on the force combining member and the region of the torque sensor.

The oil guard cover has the wall portion as a partition between the region of the large-diameter gear portion provided on the force combining member and the region of the torque sensor. This configuration can prevent oil or the like on the large-diameter gear portion of the force combining member from dispersing to the torque sensor.

### Advantageous Effects of Invention

According to the present invention, the so-called single-shaft motor drive unit transmits the resultant force of a human driving force and an auxiliary driving force to the rear wheel through the driving force output wheel coaxial with the crank shaft, the motor drive unit including the oil guard cover serving as a partition between the region of the deceleration mechanism and the region of the control board so as to prevent oil on the gears of the deceleration mechanism from penetrating into the region of the control board. Thus, the control board can be stored in the unit casing of the single-shaft motor drive unit and the oil guard cover can prevent oil on the gear portions of the deceleration mechanism and abrasion powder contained in the oil on the gear portions from penetrating into the region of the control board. This configuration can prevent the oil and abrasion powder from dispersing into the location of the control board so as to corrode the control board or the terminal of an electronic component mounted on the control board, achieving higher reliability.

In this case, the oil guard cover has the plurality of drawing openings for drawing the wires to the outside, and at least one of the drawing openings for drawing the wires from the drawing openings to the outside is selected to route the wires. Even if the wires are drawn to the outside from the drawing openings at different positions, the oil guard cover can be shared. This can reduce the manufacturing cost as compared with the case where oil guard covers are used at the respective positions.

Moreover, the cylindrical human-power transmission member is disposed on the outer periphery of the crank shaft so as to receive the transmitted human driving force, the human driving force is transmitted to the force combining member via the human-power transmission member, and the human-power transmission member has the magneto-striction generation portion for the torque sensor for detecting the human driving force. The oil guard cover has the wall portion as a partition between the region of the large-diameter gear portion provided on the force combining member and the region of the torque sensor. This configuration can prevent oil or the like on the large-diameter gear portion of the force combining member from dispersing to the torque sensor.

### Brief Description of Drawings

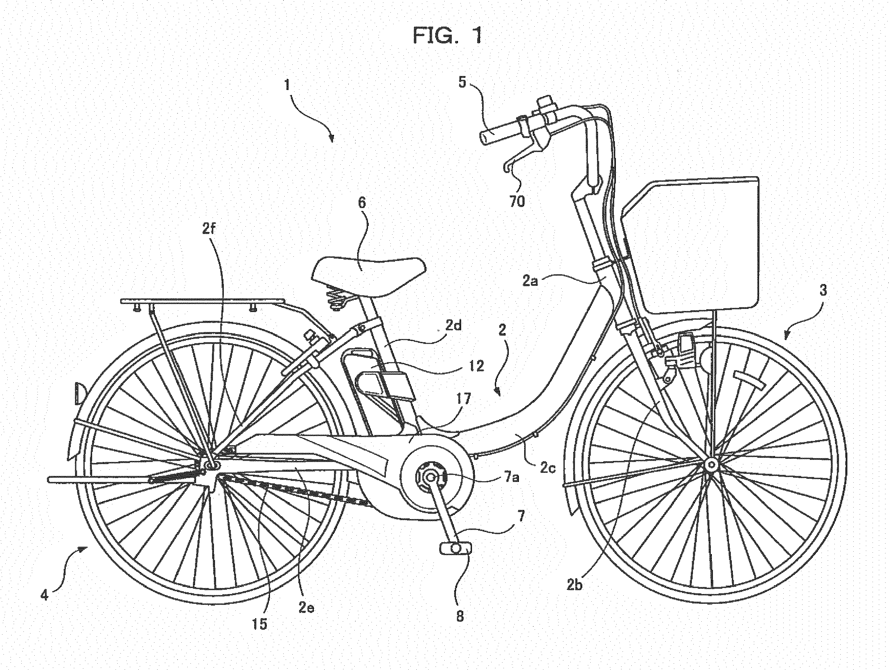

[FIG. 1] FIG. 1 is an overall side view of a power-assisted bicycle according to a first embodiment of the present invention.

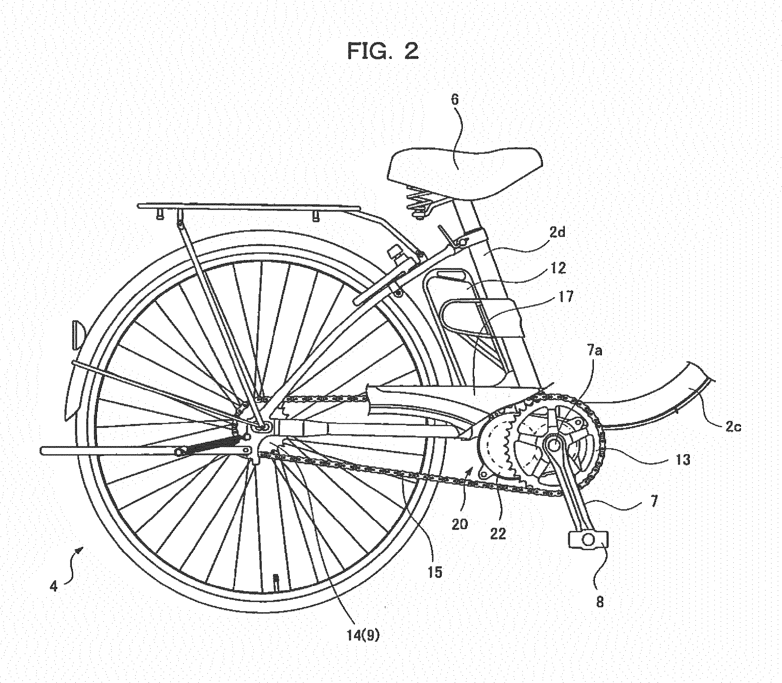

[FIG. 2] FIG. 2 is a partially cut side view of the power-assisted bicycle.

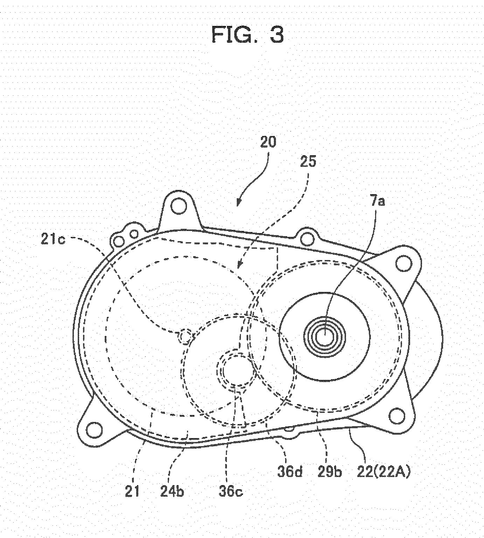

[FIG. 3] FIG. 3 is a left side view of a motor drive unit for the power-assisted bicycle (a driving sprocket is omitted).

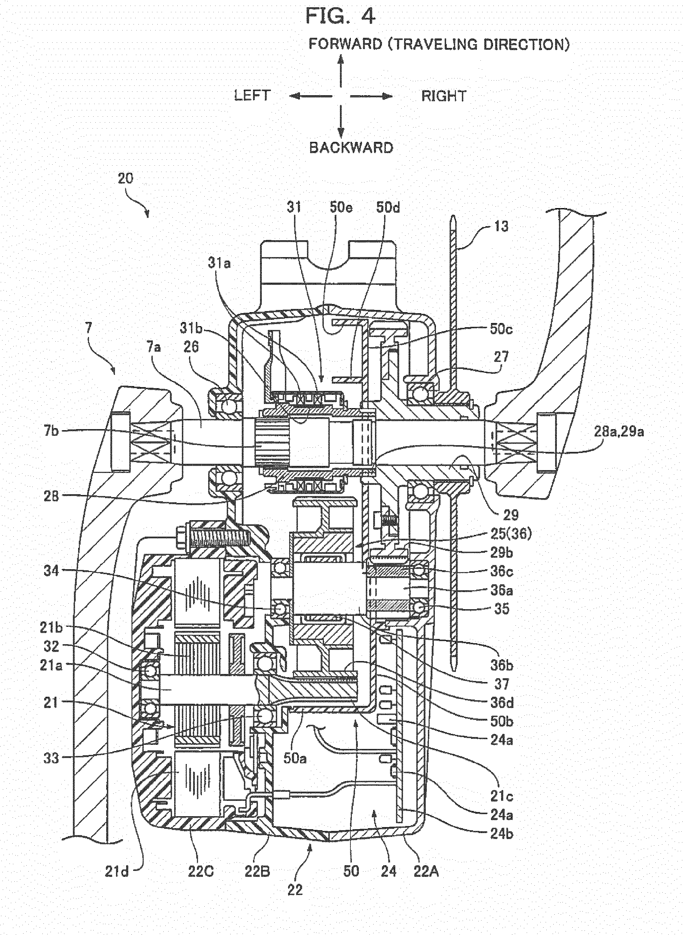

[FIG. 4] FIG. 4 is a plane cross-sectional view of the motor drive unit for the power-assisted bicycle.

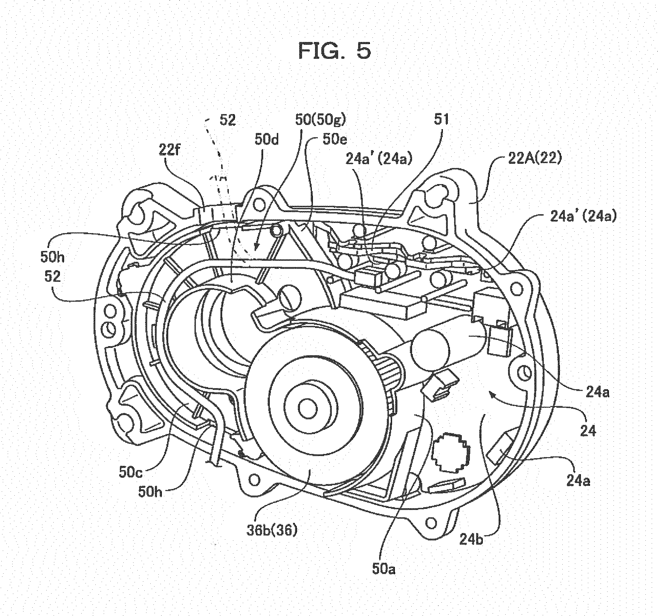

[FIG. 5] FIG. 5 is an exploded perspective view of the motor drive unit for the power-assisted bicycle (with an attached oil guard cover).

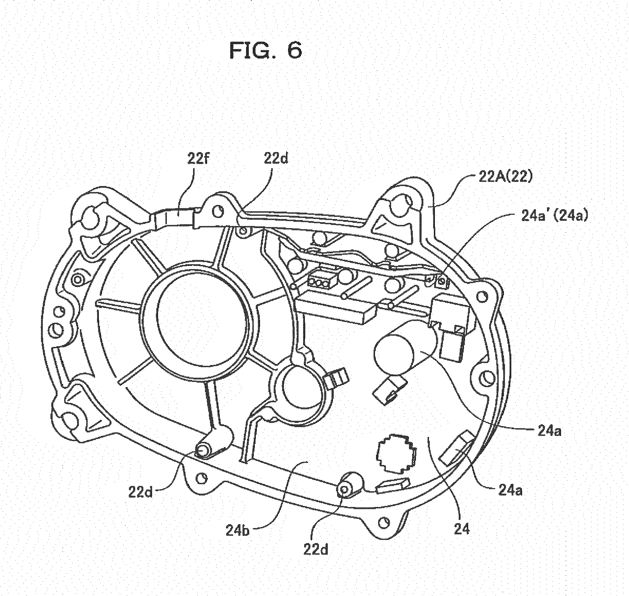

[FIG. 6] FIG. 6 is an exploded perspective view of the motor drive unit for the power-assisted bicycle (the oil guard cover is removed).

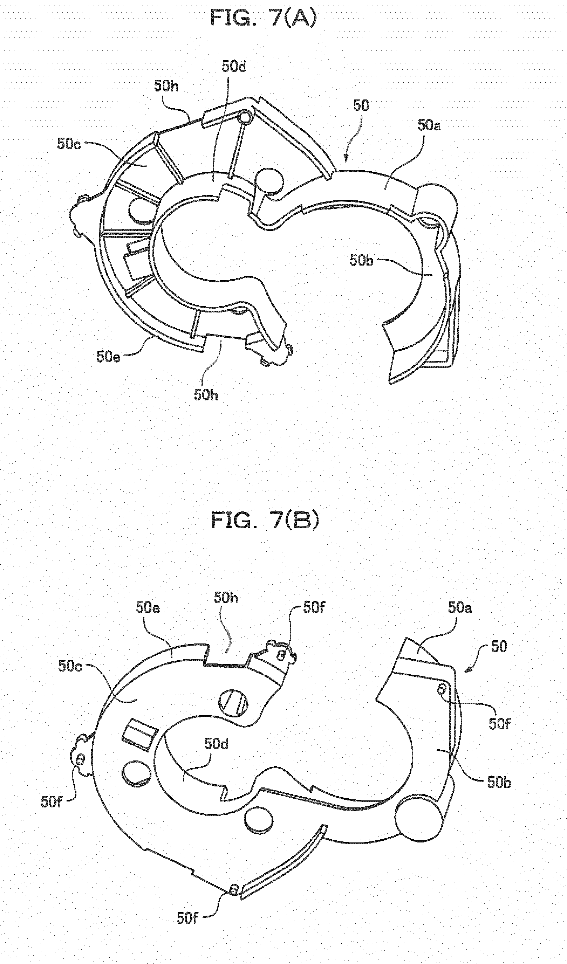

[FIG. 7] FIGS. 7(a) and 7(b) are perspective views of the oil guard cover for the motor drive unit.

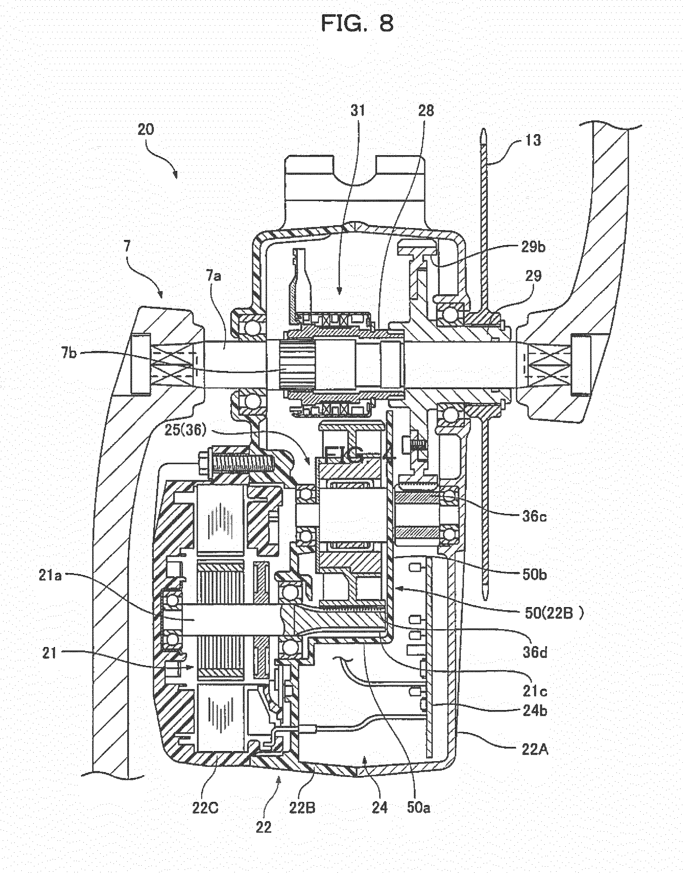

[FIG. 8] FIG. 8 is a plane cross-sectional view showing modification (1) of the oil guard cover of the motor drive unit for the power-assisted bicycle.

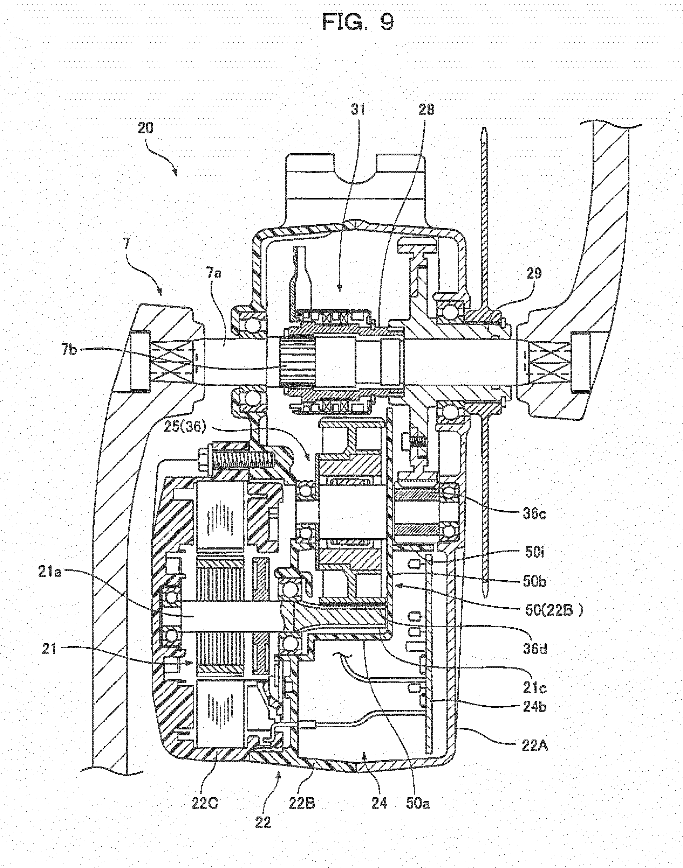

[FIG. 9] FIG. 9 is a plane cross-sectional view showing modification (2) of the oil guard cover of the motor drive unit for the power-assisted bicycle.

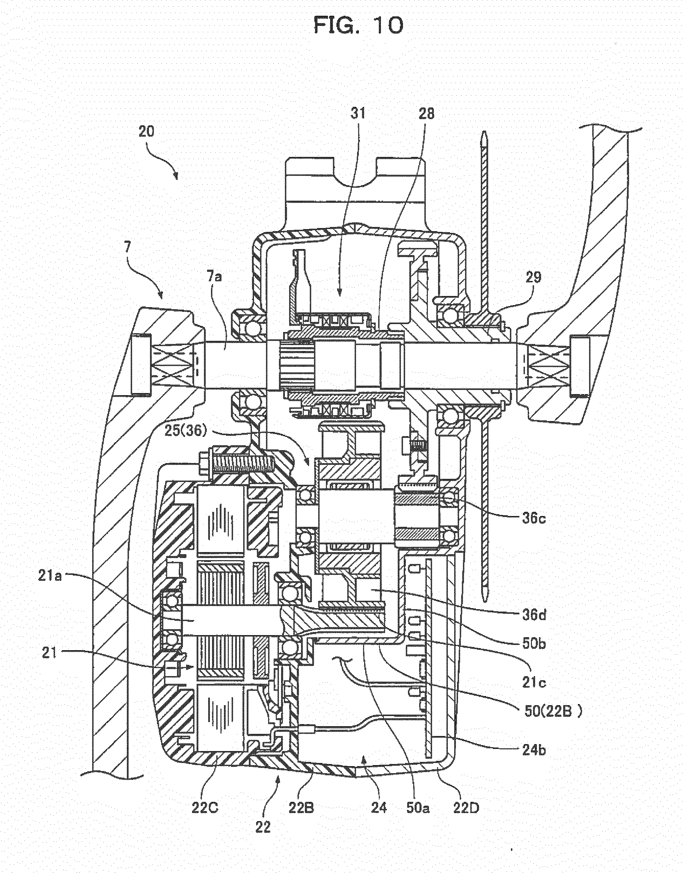

[FIG. 10] FIG. 10 is a plane cross-sectional view showing modification (3) of the oil guard cover of the motor drive unit for the power-assisted bicycle. Modification (3) does not form part of the invention but is useful for the understanding of the invention.

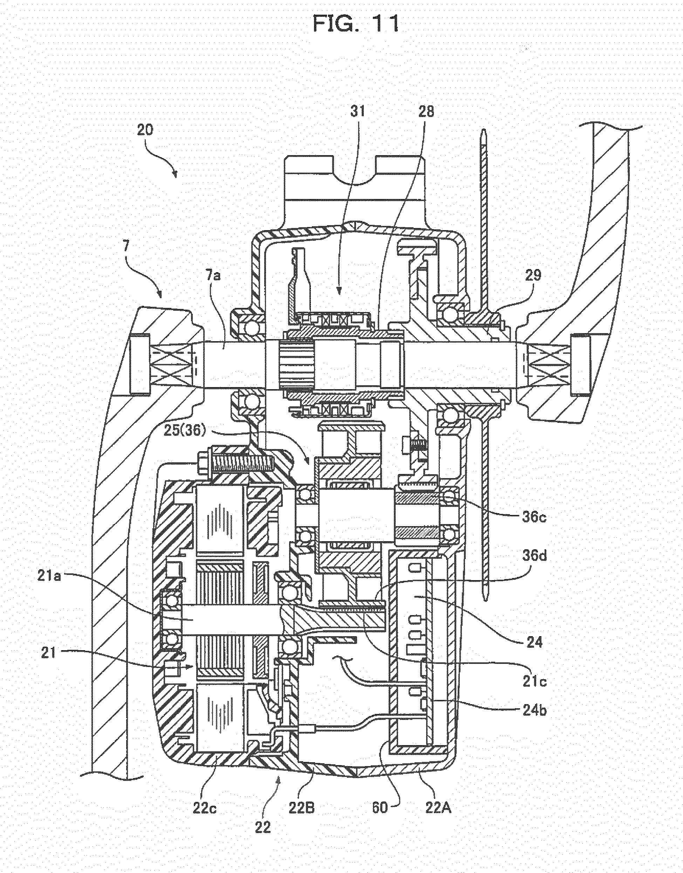

[FIG. 11] FIG. 11 is a plane cross-sectional view showing modification (4) of the oil guard cover of the motor drive unit for the power-assisted bicycle. Modification (4) does not form part of the invention but is useful for the understanding of the invention.

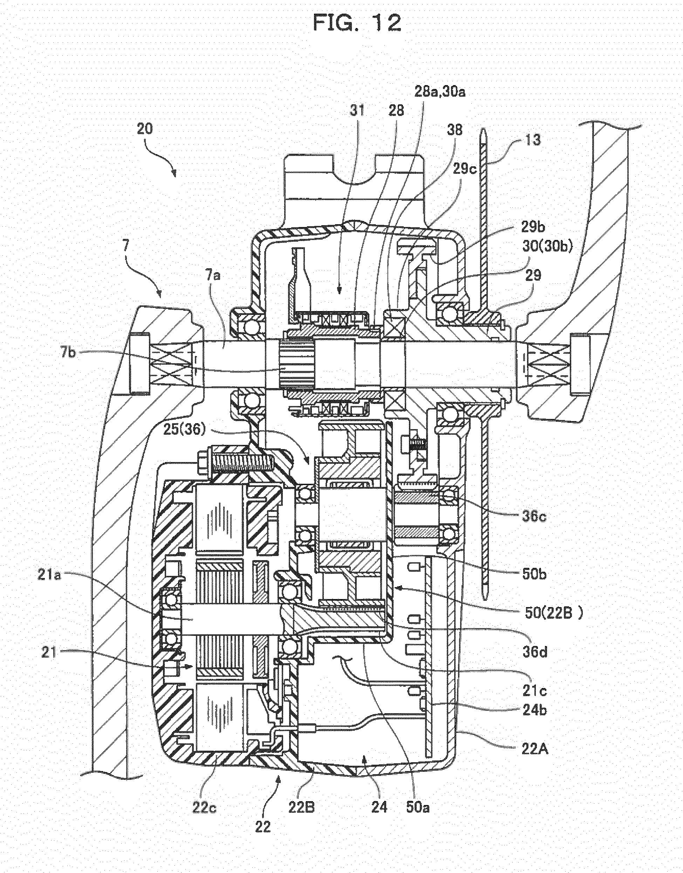

[FIG. 12] FIG. 12 is a plane cross-sectional view showing modification (5) of the oil guard cover of the motor drive unit for the power-assisted bicycle.
[FIG. 13] FIG. 13 is a side view showing a double-shaft motor drive unit and the vicinity of the motor drive unit in a conventional power-assisted bicycle.
[FIG. 14] FIG. 14 is a side view of a single-shaft motor drive unit in the conventional power-assisted bicycle.
[FIG. 15] FIG. 15 is a plane cross-sectional view of the single-shaft motor drive unit.

### Description of Embodiments

A power-assisted bicycle according to an embodiment of the present invention will be described below with reference to the accompanying drawings.

In FIGS. 1 and 2, reference numeral 1 denotes the power-assisted bicycle according to the embodiment of the present invention. As shown in FIGS. 1 and 2, the power-assisted bicycle 1 has a metallic frame 2 including a head tube 2a, a front fork 2b, a main tube 2c, a seat tube 2d, a chain stay 2e, and a seat stay 2f, a front wheel 3 rotatably attached to the lower end of the front fork 2b, a rear wheel 4 rotatably attached to the rear end of the chain stay 2e, a handle bar 5 that changes the direction of the front wheel 3, a saddle 6, a crank 7 and pedals 8 that receive a human driving force including a pedal force, a motor drive unit 20 including an electric motor 21 (See FIG. 4) serving as a driving source for generating an auxiliary driving force (assist force) and a control unit 24 (See FIG. 4) for electrically controlling the motor 21 and so on, a battery (power storage) 12 including a secondary battery for supplying driving power to the motor 21, a manual operation part (not shown) that is attached to, for example, the handle bar 5 so as to be operated by a rider and so on, a driving sprocket (also referred to as a front sprocket, a crank sprocket, or a front gear) 13 that is attached so as to coaxially rotate with the crank 7 and serves as a driving force output wheel for outputting the resultant force of a human driving force and an auxiliary driving force, a rear sprocket (also referred to as a rear gear) 14 serving as a rear gear wheel attached to a hub (also referred to as a rear hub) 9 of the rear wheel 4, a chain 15 serving as an endless driving force transmission member rotatably wound around the driving sprocket 13 and the rear sprocket 14 in an endless manner, and a chain cover 17 that laterally covers the chain 15 and so on.

The battery 12 is an example of a power storage and is preferably a secondary battery. Another example of a power storage may be a capacitor. Reference numeral 70 in FIG. 1 denotes a brake lever attached to the handle bar 5. The brake lever 70 is operated to activate a rim brake, a band brake, or a roller brake (not shown) that is provided on the front wheel 3 or the rear wheel 4. The brake on the rear wheel 4 may be replaced with a coaster brake provided on the hub of the rear wheel 4 so as to operate when the pedals are rotated in a reverse direction to the forward direction. In this case, the brake lever is not provided for the rear wheel.

As shown in FIGS. 1 and 2, also in the power-assisted bicycle, the motor drive unit 20 is disposed at the intermediate position between the front wheel 3 and the rear wheel 4, for example, substantially behind the location of a crank shaft 7a (specifically, under the intermediate position). This configuration locates the relatively heavy motor drive unit 20 at the center of the power-assisted bicycle 1 in the longitudinal direction. Thus, the front wheel 3 and the rear wheel 4 are easily lifted and the power-assisted bicycle 1 can easily pass over a step of a path, achieving ease of handling of the body (e.g., the frame 2) of the power-assisted bicycle 1 and high traveling stability.

FIG. 3 is a left side view of the motor drive unit 20 (the driving sprocket 13 is omitted). FIG. 4 is a plane cross-sectional view of the motor drive unit 20. In the following explanation, the lateral direction and the longitudinal direction are set relative to the traveling direction of a rider on the power-assisted bicycle 1 as shown in FIG. 4. The configuration of the present invention is not limited to these directions.

As shown in FIGS. 3 and 4, the motor drive unit 20 has a so-called single-shaft structure in which a human driving force generated by a pedal force and an auxiliary driving force generated by the motor 21 are combined in the motor drive unit 20 and the resultant force is outputted from the driving sprocket 13. The motor drive unit 20 will be specifically described below.

The motor drive unit 20 has an outer casing including a unit casing 22 (22A, 22B, 22C) having high strength. The crank shaft 7a laterally penetrates the front of the motor drive unit 20. Moreover, in the unit casing 22 (22A, 22B, 22C) of the motor drive unit 20, the outer periphery of the crank shaft 7a has a human-power transmission member 28 that receives a human driving force transmitted from the crank shaft 7a and a force combining member 29 that combines the human driving force transmitted through the human-power transmission member 28 and an auxiliary driving force from the motor 21. Furthermore, a deceleration mechanism 25 including a reduction gear 36 is disposed at the center of the unit casing 22 in the longitudinal direction, the motor 21 is disposed on the left side of the rear of the unit casing 22, and the control unit 24 is disposed on the right side of the rear of the unit casing 22. The control unit 24 includes a control board 24b that has a plurality of electronic components 24a for performing kinds of electrical control.

Specifically, as shown in FIG. 4, the crank shaft 7a laterally penetrating the front of the motor drive unit 20 is rotatably disposed with bearings 26 and 27. The cylindrical human-power transmission member 28 is fit onto the center of the outer periphery of the crank shaft 7a in the lateral direction via a serration part 7b serving as an engaging part such that the cylindrical human-power transmission member 28 rotates as an integral part. A magneto-striction generation portion 31b having magnetic anisotropy is formed on the outer surface of the human-power transmission member 28. Coils 31a are disposed with a certain clearance (space) on the outer periphery. The magneto-striction generation portion 31b and the coils 31a constitute a magneto-striction torque sensor (human power detection part) 31. With this configuration, a human driving force from the crank shaft 7a is transmitted to the human-power transmission member 28 through the serration part 7b and is detected by the torque sensor 31. In the magneto-striction torque sensor 31, the magneto-striction generation portion 31b is spirally formed with an angle of, for example, +45° to - 45° with respect to the axial direction of the human-power transmission member 28. When a human driving force is transmitted to the human-power transmission member 28, the magneto-striction generation portion 31b on the surface of the human-power transmission member 28 is distorted so as to cause portions thereof to increase or decrease in magnetic permeability. Thus, a difference in the inductance of the coil 31a is measured so as to quickly detect the magnitude of a torque (human driving force).

The force combining member 29 for combining a human driving force and an auxiliary driving force is disposed next to the right side of the human-power transmission member 28 on the outer periphery of the crank shaft 7a so as to rotate with respect to the crank shaft 7a. A serration part 28a is formed on the outer periphery of the right end of the human-power transmission member 28 while a serration part 29a is formed on the inner periphery of the left end of the force combining member 29. The serration parts 28a and 29a are fit into (engaged with) each other. Thus, a human driving force transmitted to the crank shaft 7a is transmitted from the human-power transmission member 28 to the force combining member 29 so as to always rotate the crank shaft 7a, the human-power transmission member 28, and the force combining member 29 in an integrated manner.

Moreover, a large-diameter gear portion 29b for receiving an auxiliary driving force from the motor 21 is integrally formed on the outer periphery near the left side of the force combining member 29 while the driving sprocket 13 is fit onto the outer periphery of the right end of the force combining member 29 so as to rotate integrally with the force combining member 29. The bearing 27 fit onto the force combining member 29 rotatably supports the crank shaft 7a via the force combining member 29. A thin bearing or the like may be disposed between the force combining member 29 and the crank shaft 7a.

The motor 21 has an output shaft 21a and a rotor 21b that are rotatably supported by bearings 32 and 33. The rotating shaft 21a of the motor 21 protrudes to the right side. A motor output small-diameter gear portion 21c is formed on the outer periphery of the protruded portion. A stator 21d of the motor 21 is placed with resin into the unit casing 22C on the left side. The deceleration mechanism 25 including the reduction gear 36 is configured such that the running torque (auxiliary driving force) of the motor 21 is amplified and is transmitted to the large-diameter gear portion 29b of the force combining member 29. A small-diameter support shaft 36a and a large-diameter support shaft 36b, which is larger than the small-diameter support shaft 36a, are integrally formed on the support shaft of the reduction gear 36. A small-diameter gear portion 36c, which is a separate part of the small-diameter support shaft 36a, is assembled to the outer periphery of the small-diameter support shaft 36a so as to integrally rotate via a press-fit, serration part, or the like. The two ends of the reduction gear support shaft, which is a combination of the small-diameter support shaft 36a and the large-diameter support shaft 36b, are supported by bearings 34 and 35 in a so-called double-support state. The small-diameter gear portion 36c is engaged with the large-diameter gear portion 29b of the force combining member 29. A motor output large-diameter gear portion 36d engaged with the motor output small-diameter gear portion 21c of the motor 21 is disposed on the outer periphery of the large-diameter support shaft 36b of the reduction gear 36.

Between the large-diameter support shaft 36b and the motor output large-diameter gear portion 36d of the reduction gear 36, a one-way clutch 37 for interrupting a human driving force is provided to prevent transmission of a human driving force (turning force) from the force combining member 29 to the motor 21. Specifically, if the inner periphery of the motor output large-diameter gear portion 36d of the reduction gear 36 is rotated according to a motor output (auxiliary driving force), e.g., a certain auxiliary driving force during traveling is outputted, in such a direction that the driving sprocket 13 moves forward relative to the outer periphery of the large-diameter support shaft 36b opposed to the motor output large-diameter gear portion 36d, the one-way clutch 37 operates so as to transmit an auxiliary driving force, which has been transmitted to the motor output large-diameter gear portion 36d of the reduction gear 36, directly to the large-diameter support shaft 36b. Moreover, the auxiliary driving force is transmitted to the large-diameter gear portion 29b of the force combining member 29 via the small-diameter support shaft 36a and the small-diameter gear portion 36c. Thus, a human driving force and the auxiliary driving force are combined in the force combining member 29 and the resultant force is transmitted from the driving sprocket 13 to the rear wheel 4 through the chain 15.

On the other hand, if the inner periphery of the motor output large-diameter gear portion 36d of the reduction gear 36 is rotated according to a motor output (auxiliary driving force) in a reverse direction to such a direction that the driving sprocket 13 moves forward relative to the outer periphery of the large-diameter support shaft 36b opposed to the motor output large-diameter gear portion 36d, for example, if the battery 12 runs out and the pedals 8 are pressed without an auxiliary driving force outputted from the motor 21, an auxiliary driving force transmitted to the motor output large-diameter gear portion 36d of the reduction gear 36 is interrupted by the one-way clutch 37 so as not to be transmitted to the large-diameter support shaft 36b. With this configuration, if the pedals 8 are pressed without an auxiliary driving force outputted from the motor 21, the motor output large-diameter gear portion 36d and the rotor 21b of the motor 21 do not need to be rotated by a human driving force.

In addition to this configuration, the power-assisted bicycle 1 of the present invention includes, as shown in FIGS. 4 to 7, an oil guard cover 50 in the motor drive unit 20 (specifically, in the unit casing 22 (22A, 22B) of the motor drive unit 20). The oil guard cover 50 is a partition between the region of the deceleration mechanism 25 and the region of the control board 24b (control unit 24) so as to prevent oil (grease) adhering (applied or injected) to the gear portions of the deceleration mechanism 25 from penetrating (dispersing) into the region of the control board 24b (control unit 24) .

In the present embodiment, the oil guard cover 50 covers the motor output small-diameter gear portion 21c provided on the output shaft 21a of the motor 21 and the motor output large-diameter gear portion 36d of the reduction gear 36 engaged with the motor output small-diameter gear portion 21c in the deceleration mechanism 25, preventing oil adhering to the gear portions from penetrating into the control unit 24 where the control board 24b and the electronic components 24a are located. Moreover, in the present embodiment, the oil guard cover 50 is extended forward with a third wall portion 50c (will be specifically described later) serving as a partition between the region of the large-diameter gear portion 29b of the force combining member 29 and the region of the torque sensor 31. The third wall portion 50c prevents oil (grease) on the large-diameter gear portion 29b provided on the force combining member 29 from penetrating (dispersing) into the region of the torque sensor 31.

As shown in FIGS. 5 to 7, the oil guard cover 50 is, for example, an integral cover made of resin. The oil guard cover 50 laterally extends in the unit casing 22 (22A, 22B) and includes a first wall portion 50a that circumferentially (from the outer periphery) covers the motor output small-diameter gear portion 21c of the motor 21 and the motor output large-diameter gear portion 36d of the reduction gear 36, a second wall portion 50b that extends like an arc radially from the right edge of the first wall portion 50a to the axis of the reduction gear 36 so as to cover the motor output large-diameter gear portion 36d of the reduction gear 36 from the right side, the third wall portion 50c that extends like a disk forward from the upper front end of the second wall portion 50b so as to cover the region of the large-diameter gear portion 29b provided on the force combining member 29 from the left side and serve as a partition between the region of the large-diameter gear portion 29b of the force combining member 29 and the region of the torque sensor 31, a fourth wall portion 50d that extends from the inner periphery of the third wall portion 50c to the left side so as to cover the human-power transmission member 28 and the torque sensor 31 from the outer periphery, a fifth wall portion 50e that extends from the outer periphery of the third wall portion 50c to the left side, and a plurality of engaging protrusions 50f that can be engaged with boss holes 22d formed on the unit casing 22A disposed on the right side.

The oil guard cover 50 to be assembled is attached to a predetermined position by fitting the engaging protrusions 50f into the boss holes 22d of the unit casing 22A. In other words, the oil guard cover 50 is detachably attached to the unit casing 22A. The second wall portion 50b of the oil guard cover 50 is disposed with a clearance on the left side from the control board 24b. The control board 24b has the multiple electronic components 24a. The electronic components 24a (heat-generating electronic components 24a') particularly having a high heating value are in contact with a metallic radiator plate 51. Moreover, at least the unit casing 22A on the right side is made of a metal and has a portion extended inward near the radiator plate 51 into contact with the radiator plate 51.

The control board 24b is connected to a plurality of wires 52 for input and output of various signals. The oil guard cover 50 has a wiring region 50g that allows routing of the wires 52 out of the motor drive unit 20. The wiring region 50g includes the third wall portion 50c, the fourth wall portion 50d, and the fifth wall portion 50e. The fifth wall portion 50e has a plurality of drawing openings 50h for drawing the wires 52 out of the motor drive unit 20, whereas the unit casing 22 (22A, 22B) only has a single drawing opening 22f for drawing the wire 52 out of the motor drive unit 20. The drawing opening 50h of the oil guard cover 50 is selected so as to correspond to the drawing opening 22f of the unit casing 22 (22A, 22B), and then the wire 52 is drawn through the drawing openings 22f and 50h.

As shown in FIG. 4, the motor 21 and the control board 24b overlap each other in the side view of the motor drive unit 20 and are disposed on opposite sides (in right and left regions) in the width direction of the motor drive unit 20 in the plan view of the motor drive unit 20.

With this configuration, the so-called single-shaft motor drive unit 20 (specifically, the unit casing 22 (22A, 22B, 22C) of the motor drive unit 20) contains the control unit 24 including the control board 24b and the electronic components 24a. Thus, the unit casing 22 (22A, 22B, 22C) having high strength protects the control board 24b and the electronic components 24a, thereby preventing damage to the control board 24b and the electronic components 24a also during traveling of the power-assisted bicycle 1.

Moreover, at least the unit casing 22A of the unit casing 22 is metallic and thus has sufficient stiffness. The electronic component 24a (heat-generating electronic component 24a'), e.g., a power device having a high heating value is disposed in contact with the unit casing 22A with the metallic radiator plate 51 interposed between the electronic component 24a and the unit casing 22A. This configuration can properly release heat from the heat-generating electronic component 24a', advantageously improving reliability.

In the present embodiment, the motor 21 and the control board 24b overlap each other in side view in the motor drive unit 20. With this configuration, in particular, the area of the single-shaft motor drive unit 20 containing the control board 24b can be advantageously reduced (more compact) in side view (laterally projected area). Since the motor 21 and the control board 24b are disposed on opposite sides in the width direction in the motor drive unit 20, the control board 24b is less affected by heat from the motor 21 so as to keep high reliability.

With this configuration, the so-called single-shaft motor drive unit 20 includes the oil guard cover 50 serving as a partition between the region of the deceleration mechanism 25 and the region of the control board 24b. Thus, the oil guard cover 50 can prevent oil (grease) on the gear portions, e.g., the motor output small-diameter gear portion 21c and the motor output large-diameter gear portion 36d, which serve as the reduction gears of the deceleration mechanism 25, and abrasion powder contained in the oil from dispersing to the control board 24b or the electronic components 24a mounted on the control board 24b. This can prevent corrosion on, for example, the terminals of the control board 24b and the electronic components 24a, achieving higher reliability.

More specifically, in the present embodiment, the oil guard cover 50 includes the first wall portion 50a that circumferentially (from the outer periphery) covers the motor output small-diameter gear portion 21c of the motor 21 and the motor output large-diameter gear portion 36d of the reduction gear 36 and the second wall portion 50b that extends like an arc radially from the right edge of the first wall portion 50a to the axis of the reduction gear 36 so as to cover the motor output large-diameter gear portion 36d of the reduction gear 36 from the right side. With this configuration, the first wall portion 50a and the second wall portion 50b of the oil guard cover 50 can prevent oil (grease) on the gear portions, e.g., the motor output small-diameter gear portion 21c and the motor output large-diameter gear portion 36d and abrasion powder on the gear portions from dispersing onto the control board 24b or the electronic components 24a mounted on the control board 24b, achieving higher reliability. The high-speed rotation of the output shaft 21a of the motor 21 particularly moves (rotates) the motor output small-diameter gear portion 21c and the motor output large-diameter gear portion 36d at high speeds. This increases the possibility of dispersion of oil on an engaged portion between the gear portions and abrasion powder on the gear portions. However, the gear portions covered with the oil guard cover 50 can properly suppress the dispersion of oil or abrasion powder on the gear portions.

In the present embodiment, the oil guard cover 50 includes the third wall portion 50c serving as a partition between the region of the large-diameter gear portion 29b of the force combining member 29 and the region of the torque sensor 31. The third wall portion 50c prevents oil (grease) on the large-diameter gear portion 29b provided on the force combining member 29 from penetrating (dispersing) into the region of the torque sensor 31. Thus, even if oil on the large-diameter gear portion 29b of the force combining member 29 or abrasion powder on the gear portions may be dispersed, the oil guard cover 50 can protect the torque sensor 31 from the oil or abrasion powder.

The oil guard cover 50 is detachably attached to the unit casing 22A of the motor drive unit 20 and thus the attachment of the oil guard cover 50 can be adjusted at any time. For example, the oil guard cover may be assembled after the attachment of the reduction gear 36 of the deceleration mechanism 25, efficiently assembling the motor drive unit 20.

With this configuration, the oil guard cover 50 has the wiring region 50g that allows routing of the wires 50, which are connected to the control board 24b, out of the motor drive unit 20, the wiring region 50g being separated from the region of the deceleration mechanism 25. Thus, the oil guard cover 50 can prevent oil on the gear portions of the deceleration mechanism 25 (including the large-diameter gear portion 29b of the force combining member 29, the motor output small-diameter gear portion 21c, and the motor output large-diameter gear portion 36d) or abrasion powder on the gear portions from adhering to the wires 50 connected to the control board 24b, thereby further improving the reliability. This configuration can also prevent the wires 50 connected to the control board 24b from coming into contact with or engagement with the gear portions (including the large-diameter gear portion 29b of the force combining member 29, the motor output small-diameter gear portion 21c, and the motor output large-diameter gear portion 36d), thereby improving the reliability.

In this case, the oil guard cover 50 has the drawing openings 50h for drawing the wires 20 to the outside and one of the drawing openings 50h is selected to route the wire. Thus, the drawing openings 22f are formed at different positions on the unit casing 22 of the motor drive unit 20. Even if the wires 50 are drawn to the outside from the drawing openings 22f at different positions, the oil guard cover 50 can be shared. This can reduce the manufacturing cost as compared with the case where oil guard covers are used at the respective positions.

With this configuration, if the pedals 8 are pressed and rotated when the battery 12 runs out, the one-way clutch 37 for interrupting a human driving force eliminates the need for rotating the motor output large-diameter gear portion 36d of the reduction gear 36 and the output shaft 21a and the rotor 21b of the motor 21, preventing the application of an excessive force to the pedals 8.

In the present embodiment, the oil guard cover 50 is detachably attached, but not exclusively, to the unit casing 22A of the motor drive unit 20. At least a part of the oil guard cover 50 may be integrally formed with the unit casing. For example, as shown in FIG. 8, the unit casing 22B disposed at the center in the width direction may be partially extended to form the oil guard cover 50. The oil guard cover 50 may include the first wall portion 50a that circumferentially (from the outer periphery) covers the motor output small-diameter gear portion 21c of the motor 21 and the motor output large-diameter gear portion 36d of the reduction gear 36 and the second wall portion 50b that extends like an arc radially from the right edge of the first wall portion 50a to the axis of the reduction gear 36 so as to cover the motor output large-diameter gear portion 36d of the reduction gear 36 from the right side.

Also in this configuration, the oil guard cover 50 having the first wall portion 50a and the second wall portion 50b can prevent oil (grease) on the gear portions, e.g., the motor output small-diameter gear portion 21c and the motor output large-diameter gear portion 36d, which are gear portions for deceleration of the deceleration mechanism 25, from dispersing to the control board 24b or the electronic components 24a mounted on the control board 24b so as to corrosively damage the control board 24b or the terminal of the electronic components 24a. In this case, the number of components can be reduced as compared with the case where the oil guard cover 50 is a separate component of the unit casing 22 (22A, 22B) of the motor drive unit 20.

As shown in FIG. 9, the oil guard cover 50 may have an auxiliary wall portion 50i that covers the small-diameter gear portion 36c of the reduction gear 36 from the outer periphery and serves as a partition between the small-diameter gear portion 36c and the control unit 24 including the control board 24b, in addition to the first wall portion 50a and the second wall portion 50b that cover the motor output small-diameter gear portion 21c and the motor output large-diameter gear portion 36d. This configuration can also reliably prevent oil or abrasion powder on the small-diameter gear portion 36c of the reduction gear 36 from dispersing onto the control board 24b. In other words, the number of gear portions in the single-shaft motor drive unit 20 is larger than that of a double-shaft motor drive unit and thus the function of preventing dispersion of grease is more important. The present embodiment can also prevent oil or abrasion powder on the gear portions from dispersedly adhering to the control unit 24 including the control board 24b or the like.

As schematically shown in FIG. 10, the unit casing 22A on the right side covers the deceleration mechanism 25. The control unit 24 including the control board 24b and the electronic components 24a may be disposed outside of the unit casing 22A and may be externally covered with an auxiliary unit casing 22D. Fig. 10 shows an example which does not form part of the invention but is useful for the understanding of the invention.

As shown in FIG. 11, an oil guard cover 60 may be formed over the control unit 24 including the control board 24b and the electronic components 24a. This configuration can also prevent oil from the gear portions from dispersedly adhering to the control board 24b or the electronic components 24a. Fig. 11 shows an example which does not form part of the invention but is useful for the understanding of the invention.

In the present embodiment, the force combining member 29 and the human-power transmission member 28 having the magneto-striction generation portion 31b of the torque sensor 31 are directly, but not exclusively, engaged with each other via the serration parts 28a and 29a. For example, as shown in FIG. 12, the present embodiment may include an interlock cylinder 30 that integrally rotates with the human-power transmission member 28 engaged with the interlock cylinder 30 and a one-way clutch 38 for interrupting an auxiliary driving force between the interlock cylinder 30 and the force combining member 29 so as to prevent transmission of an auxiliary driving force (rotary force) from the force combining member 29 to the human-power transmission member 28 and the crank shaft 7a. Thus, even if a rider stops pressing the pedals 8, the motor 21 keeps rotating for a while. Also in this case, an auxiliary driving force from the motor 21 is interrupted by the one-way clutch 38 for interrupting an auxiliary driving force and thus is not applied to the crank shaft 7a or the pedals 8.

The one-way clutch 38 for interrupting an auxiliary driving force is disposed between the interlock cylinder 30 and the force combining member 29 but is not disposed on the human-power transmission member 28. Thus, vibrations during the switching operations of the one-way clutch 38 for interrupting an auxiliary driving force and vibrations during engagement and passage of a cam are hardly transmitted to the human-power transmission member 28 on which the torque sensor 31 is provided, advantageously keeping high torque detection capability.

### Industrial Applicability

The present invention is widely applicable to a power-assisted bicycle including gear portions for deceleration and a control board in a so-called single-shaft motor drive unit.

## Claims

1. A power-assisted bicycle (1) that is adapted to travel with a combination of a human driving force generated by a pedal force from a pedal (8) and an auxiliary driving force generated by a motor (21),
the power-assisted bicycle (1) comprising:
a force combining member (29) on an outer periphery of a crank shaft (7a) that receives a human driving force transmitted from the pedal (8), the force combining member (29) combining the human driving force and the auxiliary driving force generated by the motor (21);
the human driving force and the auxiliary driving force being combined by the force combining member (29) into a resultant force transmitted to a rear wheel (4) through a driving force output wheel (13) coaxial with the crank shaft (7a) and an endless driving force transmission member (15) wound around the human driving force output wheel (13);
a deceleration mechanism (25) having a plurality of gear portions (21c, 29b, 36c, 36d) that are engaged with each other on a transmission path of an auxiliary driving force from the motor (21) to the force combining member (29);
a motor drive unit (20) that includes a unit casing (22) containing the motor (21), a central portion of the crank shaft (7a), the force combining member (29), and the deceleration mechanism (25);
a control board (24b) contained in the unit casing (22) of the motor drive unit (20), the motor drive unit (20) containing an oil guard cover (50) that serves as a partition between a region of the deceleration mechanism (25) and prevents oil on the gear portions of the deceleration mechanism from penetrating into the region of the control board (24b); and
a cylindrical human-power transmission member (28) disposed on the outer periphery of the crank shaft (7a) so as to receive the transmitted human driving force,
the force combining member (29) receiving the human driving force transmitted via the human-power transmission member (28), **characterized by**
the human-power transmission member (28) having a magneto-striction generation portion (31b) for a torque sensor (31) for detecting the human driving force,
the cover (50) having a wall portion (50c) as a partition between a region of a large-diameter gear portion (29b) provided on the force combining member (29) and a region of the torque sensor (31).

## Patentansprüche

1. Pedelec (1), das so eingerichtet ist, dass es mit einer Kombination aus einer mittels einer Pedalkraft von einem Pedal (8) erzeugten menschlichen Antriebskraft und einer von einem Motor (21) erzeugten Hilfs-Antriebskraft fährt,
wobei das Pedelec (1) umfasst:
ein Element (29) zum Kombinieren von Kräften an einem Außenumfang einer Kurbelwelle (7a), das eine von dem Pedal (8) übertragene menschliche Antriebskraft empfängt, wobei das Element (29) zum Kombinieren von Kräften die menschliche Antriebskraft und die von dem Motor (21) erzeugte Hilfs-Antriebskraft kombiniert;
wobei die menschliche Antriebskraft und die Hilfs-Antriebskraft durch das Element (29) zum Kombinieren von Kräften zu einer resultierenden Kraft kombiniert werden, die über ein Rad (13) zum Ausgeben von Antriebskraft, das koaxial zu der Kurbelwelle (7a) ist, und ein endloses Antriebskraft-Übertragungselement (15), das um das Rad (13) zum Ausgeben menschlicher Antriebskraft herum läuft, zu einem Hinterrad (4) übertragen wird;
einen Abbremsmechanismus (25), der eine Vielzahl von Zahnrad-Abschnitten (21c, 29b, 36c, 36d) aufweist, die miteinander auf einem Übertragungsweg einer Hilfs-Antriebskraft von dem Motor (21) zu dem Element (29) zum Kombinieren von Kräften in Eingriff sind;
eine Motorantriebs-Einheit (20), die ein Einheits-Gehäuse (22) enthält, das den Motor (21), einen Mittelabschnitt der Kurbelwelle (7a), das Element (29) zum Kombinieren von Kräften und den Abbremsmechanismus (25) aufnimmt;
eine Steuerungs-Leiterplatte (24b), die in dem Einheits-Gehäuse (22) der Motorantriebs-Einheit (20) aufgenommen ist,
wobei die Motorantriebs-Einheit (20) eine Öl-Schutzabdeckung (50) enthält, die als eine Trennwand zu einem Bereich des Abbremsmechanismus (25) dient und verhindert, dass Öl an den Zahnrad-Abschnitten des Abbremsmechanismus in den Bereich der Leiterplatte (24b) eindringt; sowie
ein zylindrisches Element (28) zum Übertragen menschlicher Kraft, das an dem Außenumfang der Kurbelwelle (7a) angeordnet ist und die übertragene menschliche Antriebskraft aufnimmt,
wobei das Element (29) zum Kombinieren von Kräften die über das Element (28) zum Übertragen menschlicher Kraft übertragene menschliche Antriebskraft aufnimmt, **dadurch gekennzeichnet, dass**
das Element (28) zum Übertragen menschlicher Kraft einen Abschnitt (31b) zur Erzeugung von Magnetostriktion für einen Drehmomentsensor (31) zum Erfassen der menschlichen Antriebskraft aufweist,
die Abdeckung (50) einen Wandabschnitt (50c) als eine Trennwand zwischen einem Bereich eines Zahnrad-Abschnitts (29b) mit großem Durchmesser, der sich an dem Element (29) zum Kombinieren von Kräften befindet, und einem Bereich des Drehmomentsensors (31) aufweist.

## Revendications

1. Bicyclette à assistance électrique (1) conçue pour se déplacer grâce à la combinaison d'une force d'entraînement humaine générée par une force exercée à partir d'une pédale (8) et d'une force d'entraînement auxiliaire générée par un moteur électrique (21),
la bicyclette à assistance électrique (1) comprenant :
un élément de combinaison de forces (29) sur la périphérie externe d'un arbre manivelle (7a) qui reçoit une force d'entraînement humaine transmise à partir de la pédale (8), l'élément de combinaison de forces (29) combinant la force d'entraînement humaine et la force d'entraînement auxiliaire générée par le moteur (21),
la force d'entraînement humaine et la force d'entraînement auxiliaire étant combinées par l'élément de combinaison de forces (29) en une force résultante transmise à une roue arrière (4) par l'intermédiaire d'une roue de sortie de forces entraînement (13) coaxiale à l'arbre manivelle (7a) et par un élément sans fin de transmission de force d'entraînement (15) autour de la roue de sortie de force d'entraînement humaine (13),
un mécanisme de décélération (25) comportant une pluralité d'organes d'engrenage (21c, 29b, 36c, 36d) en prise l'un avec l'autre sur la ligne de transmission d'une force d'entraînement auxiliaire issue du moteur (21) vers l'élément de combinaison de forces (29),
une unité d'entraînement à moteur (20) qui inclut un boîtier monobloc (22) contenant le moteur (21), la partie centrale de l'arbre manivelle (7a), l'élément de combinaison de forces (29) et le mécanisme de décélération (25),
un tableau de commande (24b) contenu dans le boîtier monobloc (22) de l'unité d'entraînement à moteur (100), l'unité d'entraînement à moteur (20) contenant un carter de rétention d'huile (50) qui sert de séparation entre la zone du mécanisme de décélération (25) et qui empêche l'huile sur les organes d'engrenage du mécanisme de décélération de pénétrer dans la zone du tableau de commande (24b), et
un élément cylindrique de transmission de puissance humaine (28) placé sur la périphérie externe de l'arbre manivelle (7a) de façon à recevoir la force d'entraînement humaine transmise,
l'élément de combinaison de forces (29) recevant la force d'entraînement humaine transmise par l'intermédiaire de l'élément de transmission de puissance humaine (28), **caractérisée par**
l'élément de transmission de puissance humaine (28) comportant un organe de génération de magnétostriction (31b) destiné à un capteur de couple (31) dans le but de détecter la force d'entraînement humaine,
le carter possédant une partie formant paroi (50c) sous forme d'une séparation entre la zone occupée par un organe d'engrenage de grand diamètre (29b) prévu sur l'élément de combinaison de forces (29) et la zone du capteur de couple (31).
